# EUROPÄISCHE PATENTSCHRIFT

(11) **EP 3 201 459 B1**
(45) Veröffentlichungstag und Bekanntmachung des Hinweises auf die Patenterteilung: **08.09.2021**
(21) Anmeldenummer: 15744158.5
(22) Anmeldetag: 22.07.2015
(51) Int. Cl.: F02F 3/12, C22C 38/06

(54) **KOLBEN, KOLBENMASCHINE MIT EINEM SOLCHEN SOWIE KRAFTFAHRZEUG MIT EINER SOLCHEN KOLBENMASCHINE**
PISTON, PISTON MACHINE HAVING SUCH A PISTON, AND MOTOR VEHICLE HAVING SUCH A PISTON MACHINE
PISTON, MOTEUR À PISTONS AVEC UN TEL PISTON ET VÉHICULE AUTOMOBILE AVEC UN TEL MOTEUR À PISTONS

(30) Priorität: 01.10.2014 DE 102014219970
(43) Veröffentlichungstag der Anmeldung: 09.08.2017
(73) Patentinhaber: Volkswagen Aktiengesellschaft, 38440 Wolfsburg (DE)
(72) Erfinder: KAUDEWITZ, Tobias Simon, 38114 Braunschweig (DE); MORK, Aiko, 38518 Gifhorn (DE); RABLBAUER, Ralf, 38442 Wolfsburg (DE); SCHÜTTENHELM, Martin, 38108 Braunschweig (DE)
(86) Internationale Anmeldenummer: PCT/EP2015/066761
(87) Internationale Veröffentlichungsnummer: WO 2016/050379

(56) Entgegenhaltungen:
- EP-A1- 0 427 389
- EP-A2- 1 820 952
- DE-A1-102011 112 244
- DE-A1-102012 204 947
- DE-C1- 19 603 515
- US-A- 5 352 538
- US-A1- 2009 178 640

## Beschreibung

Die Erfindung betrifft einen Kolben für eine Kolbenmaschine, insbesondere einen Hubkolbenmotor. Die Erfindung betrifft ferner eine Kolbenmaschine mit einem solchen Kolben sowie ein Fahrzeug, das die Kolbenmaschine aufweist.

Kolbenmaschinen (auch als Hubkolbenmaschine bezeichnet) umfassen ein feststehendes Bauteil, nämlich einen Zylinder, sowie einen beweglich in dem Zylinder angeordneten Kolben. Der Kolben ist im Wesentlichen aus einem Kolbenhemd, welches entlang der Zylinderwand gleitend gelagert ist, und einem Kolbenboden aufgebaut. Der Kolbenboden schließt zusammen mit dem Zylinder einen abgeschlossenen Brennraum ein, dessen Volumen sich durch die Bewegung des Kolbens entsprechend dem Arbeitstakt der Maschine verändert. Die jeweilige Stellung des Kolbens im Gehäuse bestimmt somit die Größe des Brennraums. Eine Abdichtung des Brennraums gegenüber dem Kurbelgehäuse erfolgt über am Kolbenhemd des Kolbens vorgesehene Dichtelemente. Als Werkstoffe für derartige Kolben sind Stähle und Leichtmetalllegierungen auf Aluminiumbasis verbreitet.

Die heute am weitesten verbreiteten Kolbenmaschinen stellen Otto- und Dieselmotoren dar, die insbesondere in Kraftfahrzeugen eingesetzt werden. Der Kolben muss bei Kraftfahrzeugmotoren unter anderem die im Brennraum wirkenden Gaskräfte auf die Pleuelstange übertragen. Darüber hinaus hat er die Aufgabe, die auf ihn übertragene Verbrennungswärme an das Kühlmittel weiterzuleiten.

Die Abführung thermischer Energie aus dem Brennraum ist notwendig, um die zulässigen Bauteiltemperaturen nicht zu überschreiten. Auf der anderen Seite führt die Wärmeabfuhr aus dem Brennraum über die Kolbenoberfläche jedoch zu ungenutzten Wirkungsgradpotentialen von Verbrennungsmotoren und senkt die Abgastemperaturen. Eine weitere Reduzierung der Abgastemperaturen wird durch verbrauchseinsparende Maßnahmen verursacht. Im Falle moderner Dieselmotoren sind die Abgastemperaturen bereits so gering, dass die Temperatur nachgeschalteter Katalysatoren nach einem Motorkaltstart lange Zeit unterhalb der Light-off-Temperatur oder der optimalen Betriebstemperatur des Katalysators liegt und daher die optimale Effizienz der Abgasnachbehandlung nicht erreicht wird. Zudem kann die Wärmebelastung am Kolbenboden Korrosion verursachen. Somit werden Maßnahmen angestrebt, um die Abgastemperaturen zu erhöhen oder jedenfalls nicht weiter zu reduzieren.

Um einem Wärmeabtransport aus dem Verbrennungsraum entgegenzuwirken, ist es sinnvoll, Teile des Kolbens mit isolierenden Materialien zu beschichten.

DE 196 03 515 C1 beschreibt einen Spritzwerkstoff zur Verbesserung der Korrosionsbeständigkeit heißgasbelasteter Bauteile beispielsweise von Verbrennungsanlagen oder Gasturbinen. Hierzu wird eine Beschichtung auf der Basis von Aluminium und Eisen gebildet, die daneben Spuren von weiteren Metallen, insbesondere Chrom, Silizium und Kohlenstoff, beinhaltet.

In DE 10 2006 007 148 A1 ist ein Kolben offenbart, welcher zumindest teilweise aus einer Eisen-Aluminium-Chrom-Legierung besteht, um die mechanischen Eigenschaften des Kolbens, insbesondere in Hinblick auf die Festigkeit bei höheren Temperaturen, zu verbessern.

Ferner werden keramische Kolbeneinsätze, keramische Gesamtkolben und Stahlkolben zur thermischen Isolierung eingesetzt. Es zeigte sich jedoch, dass diese Produkte Probleme in der Standfestigkeit, hohe Kosten und Akustikprobleme mit sich bringen.

In EP 2 420 658 A1 wird eine keramische Kolbenbeschichtung auf Basis von Aluminiumoxid vorgeschlagen. Diese weist jedoch, insbesondere beim Einsatz in Dieselmotoren, eine geringe Haltbarkeit auf.

WO 14030297 A1 offenbart eine Kolbenbeschichtung auf Siliconharzbasis, wobei in das Harz wärmedämmende Hohlteilchen eingelassen sind. Problematisch ist, dass Siliconharze für den Einsatz in Kolbenmaschinen eine zu geringe Temperaturbeständigkeit aufweisen. Die dort beschriebene Lösung hat zudem den Nachteil, dass die Hohlteilchen die maximal erreichbare Dämmwirkung begrenzen und somit die Haltbarkeit der Harzmatrix weiter herabsetzen.

Ferner ist aus US 5,352,538 ein Verfahren zum Aufbringen einer Härtungsschicht aus Aluminium und mindestens einem weiteren Metall auf eine Al-Leichtmetalllegierung bekannt.

EP 0 427 389 A1 betrifft ein Verfahren zum Behandeln der Oberfläche einer eisenhaltigen Zylinderlaufbuchse eines Motors. Zu diesem Zweck wird die Komponente in ein Bad aus geschmolzenem Aluminium getaucht und verbleibt dort, bis sich eine intermetallische Eisen-Aluminium Verbindung bildet. Nach Entfernen aus dem Aluminiumbad verbleibt eine AluminiumSchicht auf der Oberfläche der Komponente und infolge von unmittelbar stattfindender Oxidation formt sich eine Aluminiumoxidschicht. Diese Oxidschicht wird noch im geschmolzenen Zustand in einem Bad aus einer Zinklegierung getaucht, wodurch die Aluminiumoxidschicht entfernt wird, sodass eine schützende Zinkschicht an der Oberfläche der Komponente verbleibt.

Der Erfindung liegt nun die Aufgabe zugrunde, die Probleme des Standes der Technik zu lösen oder zumindest zu mindern. Insbesondere soll ein Kolben bereitgestellt werden, mit dem eine Erhöhung der Abgastemperatur und eine Wirkungsgradverbesserung bei gleichzeitig hoher Haltbarkeit erzielt werden.

Diese Aufgabe wird erfindungsgemäß durch einen Kolben, eine Kolbenmaschine und ein Kraftfahrzeug mit den Merkmalen der unabhängigen Ansprüche gelöst.

Somit betrifft die Erfindung einen Kolben für eine Kolbenmaschine. Der Kolben umfasst einen Kolbenboden, ein Kolbenhemd sowie eine auf einer Oberfläche des Kolbens, also auf der Oberfläche von Kolbenboden und/oder Kolbenhemd, angeordnete Beschichtung. Erfindungsgemäß umfasst die Beschichtung eine Legierung oder eine intermetallische Verbindung auf Basis von Eisen-Aluminium, wobei die Beschichtung 0,1 bis 10 Gew.-% Chrom umfasst und so angeordnet ist, dass sie im Montagezustand des Kolbens in der Kolbenmaschine zumindest abschnittsweise an einen Brennraum der Kolbenmaschine angrenzt.

Die Anordnung der erfindungsgemäßen Beschichtung führt in vorteilhafter Weise zu einer Wirkungsgradsteigerung des Verbrennungsprozesses. Der Wirkungsgrad der Kolbenmaschine wird insbesondere dadurch erhöht, dass weniger Wärme aus dem Verbrennungsraum beziehungsweise dem Zylinderraum abtransportiert wird. Im Verbrennungsraum herrschen bei Verwendung des erfindungsgemäßen Kolbens somit höhere Temperaturen als aus dem Stand der Technik bekannt. Höhere Temperaturen wiederum führen zu einem höheren Wirkungsgrad. Zusätzlich wirkt sich eine Temperaturerhöhung im Verbrennungsraum positiv auf die Abgasbehandlung aus, da auch die Abgase eine höhere Temperatur aufweisen und somit zu einem beschleunigten Aufheizen und Anspringen der Katalysatoren führen. Vorteilhafterweise sorgt die erfindungsgemäße Beschichtung auf dem Kolben für eine thermische Isolation und/oder einen Korrosionsschutz der Kolbenoberfläche beziehungsweise des Kolbens.

Die erfindungsgemäße Beschichtung ist insbesondere bei der Verwendung in Dieselmotoren vorteilhaft, da die relativ niedrigen dieselmotorischen Abgastemperaturen durch die erfindungsgemäße Beschichtung erhöht werden und somit der Wirkungsgrad und die Effizienz der Abgasnachbehandlung erhöht werden.

Kolbenmaschinen sind Fluid-Energie-Maschinen, in denen ein Verdränger, nämlich der Kolben, mittels seiner Bewegung einen sich periodisch verändernden Arbeitsraum definiert. In vorliegender Erfindung wird unter Kolbenmaschine sowohl ein Drehkolbenmotor, welcher beispielsweise über einen Scheibenkolben verfügt, als auch ein Hubkolbenmotor mit insbesondere zylindrischem Kolben verstanden. Der Bereich des Kolbens, der dem Verbrennungsraum zugewandt ist und somit in Kontakt mit dem Luft-Kraftstoffgemisch beziehungsweise Abgas steht, ist in vorliegender Erfindung als Kolbenboden bezeichnet.

In Hubkolbenmotoren, welche über Kolben mit im Wesentlichen zylindrischer Geometrie verfügen, weist der Kolbenboden in Draufsicht eine runde Form auf, welche an eine zylindrisch umlaufende Seitenwand, dem Kolbenhemd, anschließt. Die Oberfläche des Kolbenbodens wiederum kann vielfältige Konturen aufweisen. So sind in vorliegender Erfindung sowohl planare als auch konkav oder konvex gewölbte Formgestaltungen des Kolbenbodens möglich. Ebenfalls kann der Kolbenboden über Mulden und über Erhöhungen beispielsweise in Form von Nasen verfügen, die in dem Kolbenboden eingelassen sind und/oder aus diesem herausragen.

Intermetallische Verbindungen beziehungsweise intermetallische Phasen, sind homogene chemische Verbindungen aus zwei oder mehr Metallen. Sie zeigen im Unterschied zu Legierungen Gitterstrukturen, die sich von denen der konstituierenden Metalle unterscheiden. In ihrem Gitter herrscht eine Mischbindung aus einem metallischen Bindungsanteil und geringeren Atombindungs- beziehungsweise lonenbindungsanteilen, die in Überstrukturen resultieren können. Die vorliegend bevorzugten intermetallischen Verbindungen oder Legierungen basieren jeweils auf Eisen und Aluminium. Darunter wird verstanden, dass mindestens 50 Gew.-% der intermetallischen Verbindung oder der Legierung aus Eisen und Aluminium besteht. Die auf Eisen und Aluminium basierenden intermetallischen Verbindungen oder Legierungen werden vorliegend auch als FeAl-Legierung oder-Verbindung bezeichnet.

Es ist vorteilhaft, die Kolbenoberfläche nur bereichsweise, insbesondere im Bereich des Kolbenbodens zu beschichten, da dieser Bereich mit dem Brennraum und somit mit den höchsten Temperaturen in Verbindung steht. Diese Ausgestaltung bringt somit eine Kostenersparnis, ohne Einbußen hinsichtlich der gewünschten thermischen Isolierung in Kauf nehmen zu müssen. Zudem kann der Oberflächenwerkstoff für das Kolbenhemd in dieser Ausgestaltung in Hinblick auf die gewünschten mechanischen und/oder tribologischen Eigenschaften optimiert werden.

In einer bevorzugten Ausgestaltung der Erfindung ist vorgesehen, dass die Beschichtung 8 bis 33 Gew.-% Aluminium umfasst. Dies ist vorteilhaft, da Aluminium als Hauptbestandteil der intermetallischen Verbindung beziehungsweise der Legierung neben Eisen im bevorzugten Bereich eigenschaftsbestimmend ist.

Die als Beschichtung bevorzugte intermetallische Verbindung oder Legierung zeichnet sich insbesondere dadurch aus, dass sie neben einer besonders hohen Temperaturfestigkeit von über 500 °C einen mit dem Kolbenbasismaterial kompatiblen thermischen Ausdehnungskoeffizienten aufweist. Das bedeutet, dass die Volumenausdehnung, welche die Beschichtung infolge von Temperaturerhöhung erfährt, sich so wenig von der Wärmeausdehnung des Werkstoffs von Kolbenboden und Kolbenhemd unterscheidet, dass es nicht zu einer Delamination kommt. Somit kann durch eine geeignete Wahl der Zusammensetzung der Verbindung, die Lebensdauer der Beschichtung auf dem Kolben deutlich erhöht werden.

Ein Anteil von 8 bis 33 Gew.-% Aluminium in der Legierung (der FeAl-Basislegierung) oder der intermetallischen FeAl-Verbindung führt zudem vorteilhafterweise zu einem Wärmeausdehnungskoeffizienten, der dem von üblichen Kolbenbasismaterialien, insbesondere von Leichtmetallkolben, sehr ähnlich ist. Dies gilt insbesondere für Kolben aus eutektischen AISi-Legierungen als Basismaterial, die einen thermischen Ausdehnungskoeffizienten von etwa α ≈ 20·10e⁻⁶ K⁻¹ aufweisen. Besonders geeignet zeigt sich hierbei die intermetallische Verbindung Fe-24Al, also eine Verbindung mit raumzentrierter Gitterstruktur (B2) und einem Massenanteil von 24 Gew.-% Aluminium.

In weiterer bevorzugter Ausgestaltung der Erfindung umfasst die Beschichtung 0,1 bis 8 Gew.-% Cr, vorzugsweise 1 bis 7 Gew.-% Cr. Es zeigte sich, dass die Anwesenheit von Chrom in der Beschichtung vorteilhafterweise zu einer besseren Nasskorrosionsbeständigkeit führt. Als besonders vorteilhaft hinsichtlich der Nasskorrosionsbeständigkeit erwies sich eine Beschichtung, insbesondere in Form einer intermetallischen Verbindung, die zumindest 16 Gew.-% Aluminium und 5 Gew.-% Chrom aufweist (Fe-16Al-5Cr). Zusammensetzungen mit höheren Al- und/oder Cr-Gehalten weisen eine noch weiter verbesserte Nasskorrosionsbeständigkeit auf.

Ferner ist bevorzugt, dass die Beschichtung neben Eisen, Aluminium und Chrom weitere Elemente aufweist. Somit weist in einer weiteren bevorzugten Ausgestaltung der Erfindung die Beschichtung 8 bis 33 Gew.-% Al, 0,1 bis 10 Gew.-% Cr, 0 bis 10 Gew.-% Co, 0 bis 4 Gew.-% Mo, 0 bis 10 Gew.-% Ni, 0 bis 5 Gew.-% W, 0 bis 5 Gew.-% Re, 0 bis 6 Gew.-% Ta, 0 bis 5 Gew.-% Ti, 0 bis 4 Gew.-% V, 0 bis 20 Gew.-% Mn, 0 bis 1 Gew.-% Si, 0 bis 10 Gew.-% Nb, 0 bis 2 Gew.-% Hf, 0 bis 1 Gew.-% B, 0 bis 5 Gew.-% C, 0 bis 0,3 Gew.-% N, 0 bis 3 Gew.-% Zr, 0 bis 3 Gew.-% Y, 0 bis 1 Gew.-% Ce, 0 bis 2 Gew.-% Ga, 0 bis 2 Gew.-% La und 0 bis 2 Gew.-% Pt auf, wobei Fe und unvermeidbare Verunreinigungen den zu 100 Gew.-% verbleibenden Rest bilden.

Der Vorteil dieser Ausgestaltungen liegt darin, dass insbesondere die Elemente Co, Mo, Ni, W, Ti, V, Mn, Si, Nb durch Mischkristallbildung mit der Verbindungsmatrix aus Fe und Al und Ausscheidungshärtung die Festigkeit der Beschichtung erhöhen. C und B dienen insbesondere in Verbindung mit Ti, Hf und Zr der Ausscheidungsbildung von zusätzlichen Teilchen, was den vorgenannten Effekt verstärkt. Darüber hinaus hat die Zugabe von C zur Beschichtung einen positiven Einfluss auf eine spanabhebende Bearbeitbarkeit der Beschichtungsoberfläche.

Mit besonderem Vorteil weist die Beschichtung 10 bis 30 Gew.-% Al, 0,1 bis 5 Gew.-% Cr, 0 bis 5 Gew.-% Co, 0 bis 4 Gew.-% Mo, 0 bis 5 Gew.-% Ni, 0 bis 4 Gew.-% W, 0 bis 3 Gew.-% Re, 0 bis 3 Gew.-% Ta, 0 bis 5 Gew.-% Ti, 0 bis 4 Gew.-% V, 0 bis 10 Gew.-% Mn, 0 bis 1 Gew.-% Si, 0 bis 5 Gew.-% Nb, 0 bis 2 Gew.-% Hf, 0 bis 1 Gew.-% B, 0 bis 2 Gew.-% C, 0 bis 0,3 Gew.-% N, 0 bis 3 Gew.-% Zr, 0 bis 1 Gew.-% Y, 0 bis 0,5 Gew.-% Ce, 0 bis 1 Gew.-% Ga, 0 bis 1 Gew.-% La und 0 bis 1 Gew.-% Pt auf, wobei Fe und unvermeidbare Verunreinigungen den zu 100 Gew.-% verbleibenden Rest bilden.

Insbesondere bevorzugt ist, dass die Beschichtung 15 bis 29 Gew.-% Al, 0,1 bis 5 Gew.-% Cr, 0 bis 4 Gew.-% Mo, 0 bis 2 Gew.-% Ni, 0 bis 4 Gew.-% W, 0 bis 5 Gew.-% Ti, 0 bis 4 Gew.-% V, 0 bis 1 Gew.-% Si, 0 bis 5 Gew.-% Nb, 0 bis 2 Gew.-% Hf, 0 bis 1 Gew.-% B, 0 bis 2 Gew.-% C, 0 bis 0,3 Gew.-% N, 0 bis 3 Gew.-% Zr, aufweist, wobei Fe und unvermeidbare Verunreinigungen den zu 100 Gew.-% verbleibenden Rest bilden.

Die derartig zusammengesetzten Beschichtungen zeichnen sich durch besonders niedrige Wärmeleitfähigkeiten von höchstens 14 W·m⁻¹K⁻¹, insbesondere von höchstens 13 W·m⁻¹K⁻¹, typischerweise von etwa 12 W·m⁻¹K⁻¹ aus. Zudem ist der Wärmeausdehnungskoeffizient der Beschichtung dem von Leichtmetallverbindungen auf Aluminium-Basis sehr ähnlich, sodass eine Beschichtung in einer dieser Ausgestaltungen eine sehr geringe Delaminationsneigung zeigt.

In weiter bevorzugter Ausgestaltung der Erfindung ist vorgesehen, dass der Kolbenboden und/oder das Kolbenhemd eine Leichtmetalllegierung umfasst oder aus einer solchen besteht. Somit ist das Basiskolben zumindest teilweise aus einer Leichtmetalllegierung gefertigt. Unter Leichtmetalllegierung sind grundsätzlich alle Leichtmetalllegierungen zu verstehen, die in mechanischer Hinsicht den Anforderungen eines Kolbens entsprechen. In vorliegender Erfindung bevorzugt sind Aluminiumlegierungen, insbesondere Aluminium-Silizium-Legierungen, wobei der Siliziumgehalt variabel ist und bis zu übereutektischen Konzentrationen reichen kann. Insbesondere bevorzugt sind Al-Si12-Basislegierungen, die 12 Gew.-% Silizium aufweisen (beispielsweise EN AC AlSi12CuNiMg).

Diese Legierungen haben den Vorteil, dass sie einen mit der erfindungsgemäßen Beschichtung, insbesondere einer Beschichtung mit 10 bis 30 Gew.-% Aluminium, sehr ähnlichen Wärmeausdehnungskoeffizienten aufweisen und somit die Delaminationsneigung herabsetzen. Diese ist insbesondere dann minimiert, wenn der Unterschied in den Wärmeausdehnungskoeffizienten zwischen Kolben, insbesondere Kolbenoberfläche, und darauf angeordneter Beschichtung maximal 10 % bezogen auf eine Erwärmung von 1 K beträgt.

Für die Aufbringung der Beschichtung auf den Kolbenboden und/oder das Kolbenhemd sind in einer bevorzugten Ausgestaltung thermische Spritzverfahren bevorzugt. Dazu zählen insbesondere atmosphärisches Plasmaspritzen, Hochgeschwindigkeits-Flammspritzen, Vakuum-Flammspritzen und Vakuum-Plasmaspritzen. Besonders gute Ergebnisse in Bezug auf die Schichthaftung werden dabei mit Hochgeschwindigkeits-Flammspritzen erzielt.

Die Erfindung betrifft ferner eine Kolbenmaschine, die zumindest einen Zylinder mit jeweils einem darin angeordneten Kolben gemäß vorliegender Erfindung umfasst.

Ferner betrifft die Erfindung ein Kraftfahrzeug, welches eine solche Kolbenmaschine aufweist.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in einem bevorzugten Ausführungsbeispiel anhand der zugehörigen Zeichnung erläutert. Es zeigt:

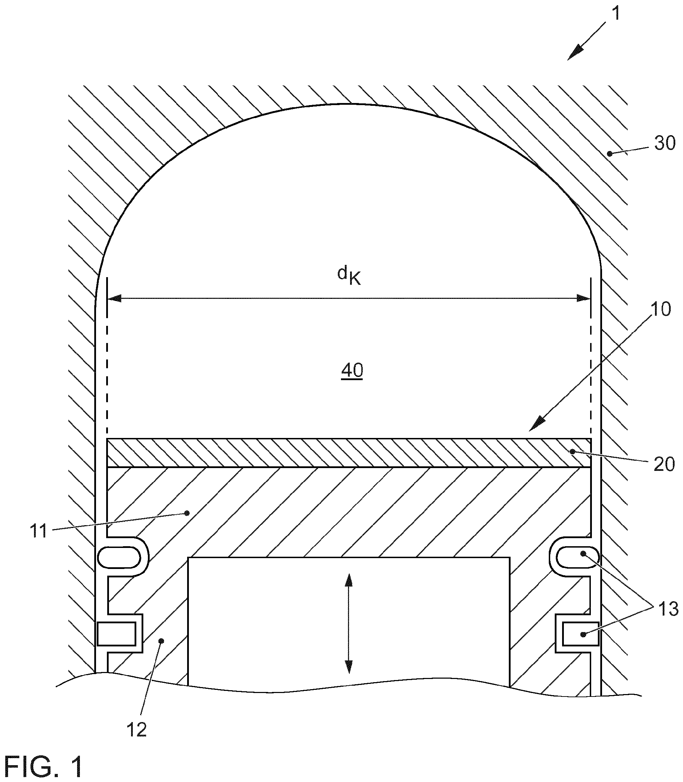

- Figur 1: eine schematische Schnittdarstellung einer Kolbenmaschine mit einem Kolben in einer bevorzugten Ausgestaltung der Erfindung.

Eine bevorzugte Ausgestaltung einer Kolbenmaschine mit einem erfindungsgemäßen Kolben ist anhand einer Schnittdarstellung in der Figur 1 gezeigt, die eine insgesamt mit 1 angedeutete Kolbenmaschine in Gestalt eines Hubkolbenmotors, vorzugsweise eines Dieselmotors, darstellt. Die Kolbenmaschine 1 umfasst einen hier zylindrischen Kolben 10 mit einem Durchmesser d_{K}, der in einem Zylinder 30 axial beweglich angeordnet ist.

In der gezeigten Ausgestaltung weist der Kolben 10 ein Kolbenhemd 12 auf, das in Form eines Zylindermantels ausgebildet ist, sowie einen im Wesentlichen kreisrunden, planen Kolbenboden 11. Kolbenboden 11 und Kolbenhemd 12 sind vorzugsweise einstückig ausgebildet und sind bevorzugt aus einer Leichtmetalllegierung gefertigt. Besonders bevorzugt sind dabei Aluminiumlegierungen, insbesondere Aluminium-Silizium-Legierungen. Der Kolben 10 verfügt ferner über umlaufende Nuten, welche Dichtungselemente 13, sogenannte Kolbenringe, aufnehmen.

Der Kolben 10 ist mit einer nicht gezeigten Pleuelstange mit einer Kurbelwelle zum Antrieb eines Fahrzeugs verbunden. Ebenfalls nicht dargestellt sind Ein- und Auslasskanäle und entsprechende Ein- und Auslassventile sowie ein Kraftstoffinjektor, die im Bereich des Zylinderkopfes angeordnet sind.

Der Kolben 10, insbesondere sein Kolbenboden 11, und der Zylinder 30 definieren einen Brennraum 40, dessen Volumen durch die Position des Kolbens 10 bestimmt wird.

Der Kolbenboden 11 weist eine erfindungsgemäße Beschichtung 20 mit geringem Wärmeleitwert auf. Bei der Beschichtung 20 handelt es sich vorzugsweise um eine intermetallische Verbindung auf Basis von Eisen und Aluminium, der weitere Elemente beigemischt sein können. Beispielsweise weist die Beschichtung 20 bei einem Anteil von 10 bis 30 Gew.-% Aluminium einen Wärmeleitwert um 12 W/mK auf.

Der Beschichtung 20 kommt durch ihre wärmedämmenden Eigenschaften eine isolierende Funktion zu. Aufgrund des sehr niedrigen Wärmeleitwertes λ der Beschichtung 20, wird nur ein geringer Teil der im Brennraum 40 entstehenden Verbrennungswärme über die Oberfläche des Kolbenbodens 11 aus dem Zylinderraum abgeführt. Vielmehr verbleibt die Wärme innerhalb des Brennraums 40 und steht somit für die Leistung mechanischer Arbeit zur Verfügung. Dadurch wird im Brennraum 40 ein höherer Wirkungsgrad realisiert. Aufgrund der hohen Abgastemperaturen des aus dem Brennraum 40 abgeführten Abgases wird zudem die Aufheizung eines nachgeschalteten Katalysatorsystems beschleunigt, wodurch die katalytische Abgasaufbereitung optimiert wird.

### Bezugszeichenliste

- 1: Kolbenmaschine

- 10: Kolben
- 11: Kolbenboden
- 12: Kolbenhemd
- 13: Dichtungselement

- 20: Beschichtung

- 30: Zylinder

- 40: Brennraum

## Patentansprüche

1. Kolben (10) für eine Kolbenmaschine (1), umfassend einen Kolbenboden (11), ein Kolbenhemd (12) sowie eine auf einer Oberfläche des Kolbens (10) angeordnete Beschichtung (20), **dadurch gekennzeichnet, dass** die Beschichtung (20) eine Legierung auf Basis von Eisen-Aluminium oder eine intermetallische Verbindung auf Basis von Eisen-Aluminium umfasst, wobei die Beschichtung (20) 0,1 bis 10 Gew.-% Chrom umfasst und so angeordnet ist, dass sie im Montagezustand des Kolbens (10) zumindest abschnittsweise an einen Brennraum (40) der Kolbenmaschine (1) angrenzt.

2. Kolben (10) nach Anspruch 1, **dadurch gekennzeichnet, dass** die Beschichtung (20) 8 bis 33 Gew.-% Aluminium umfasst.

3. Kolben (10) nach einem der vorhergehenden Ansprüche, **dadurch gekennzeichnet, dass** die Beschichtung (20) mindestens 16 Gew.-% Al und mindestens 5 Gew.-% Cr aufweist.

4. Kolben (10) nach einem der vorhergehenden Ansprüche, **dadurch gekennzeichnet, dass** die Beschichtung (20) 8 bis 33 Gew.-% Al, 0,1 bis 10 Gew.-% Cr, 0 bis 10 Gew.-% Co, 0 bis 4 Gew.-% Mo, 0 bis 10 Gew.-% Ni, 0 bis 5 Gew.-% W, 0 bis 5 Gew.-% Re, 0 bis 6 Gew.-% Ta, 0 bis 5 Gew.-% Ti, 0 bis 4 Gew.-% V, 0 bis 20 Gew.-% Mn, 0 bis 1 Gew.-% Si, 0 bis 10 Gew.-% Nb, 0 bis 2 Gew.-% Hf, 0 bis 1 Gew.-% B, 0 bis 5 Gew.-% C, 0 bis 0,3 Gew.-% N, 0 bis 3 Gew.-% Zr, 0 bis 3 Gew.-% Y, 0 bis 1 Gew.-% Ce, 0 bis 2 Gew.-% Ga, 0 bis 2 Gew.-% La und 0 bis 2 Gew.-% Pt aufweist und Fe und unvermeidbare Verunreinigungen den zu 100 Gew.-% verbleibenden Rest bilden.

5. Kolben (10) nach einem der Ansprüche 1 bis 3, **dadurch gekennzeichnet, dass** die Beschichtung (20) 10 bis 30 Gew.-% Al, 0,1 bis 5 Gew.-% Cr, 0 bis 5 Gew.-% Co, 0 bis 4 Gew.-% Mo, 0 bis 5 Gew.-% Ni, 0 bis 4 Gew.-% W, 0 bis 3 Gew.-% Re, 0 bis 3 Gew.-% Ta, 0 bis 5 Gew.-% Ti, 0 bis 4 Gew.-% V, 0 bis 10 Gew.-% Mn, 0 bis 1 Gew.-% Si, 0 bis 5 Gew.-% Nb, 0 bis 2 Gew.-% Hf, 0 bis 1 Gew.-% B, 0 bis 2 Gew.-% C, 0 bis 0,3 Gew.-% N, 0 bis 3 Gew.-% Zr, 0 bis 1 Gew.-% Y, 0 bis 0,5 Gew.-% Ce, 0 bis 1 Gew.-% Ga, 0 bis 1 Gew.-% La und 0 bis 1 Gew.-% Pt aufweist und Fe und unvermeidbare Verunreinigungen den zu 100 Gew.-% verbleibenden Rest bilden.

6. Kolben (10) nach einem der Ansprüche 1 bis 3, **dadurch gekennzeichnet, dass** die Beschichtung (20) 15 bis 29 Gew.-% Al, 0,1 bis 5 Gew.-% Cr, 0 bis 4 Gew.-% Mo, 0 bis 2 Gew.-% Ni, 0 bis 4 Gew.-% W, 0 bis 5 Gew.-% Ti, 0 bis 4 Gew.-% V, 0 bis 1 Gew.-% Si, 0 bis 5 Gew.-% Nb, 0 bis 2 Gew.-% Hf, 0 bis 1 Gew.-% B, 0 bis 2 Gew.-% C, 0 bis 0,3 Gew.-% N und 0 bis 3 Gew.-% Zr, aufweist und Fe und unvermeidbare Verunreinigungen den zu 100 Gew.-% verbleibenden Rest bilden.

7. Kolben (10) nach einem der vorhergehenden Ansprüche, **dadurch gekennzeichnet, dass** der Kolbenboden (11) und/oder das Kolbenhemd (12) eine Leichtmetalllegierung, insbesondere eine Aluminium-Silizium-Legierung, umfassen oder aus einer solchen bestehen.

8. Kolben (10) nach einem der vorhergehenden Ansprüche, **dadurch gekennzeichnet, dass** die Beschichtung (20) und der Kolbenboden (11) einen voneinander um maximal 10% unterschiedlichen Wärmeausdehnungskoeffizienten aufweisen.

9. Kolbenmaschine (1), umfassend einen Zylinder (30) und einen darin angeordneten Kolben (10) nach einem der Ansprüche 1 bis 8.

10. Kraftfahrzeug aufweisend eine Kolbenmaschine (1) nach Anspruch 9.

## Claims

1. Piston (10) for a piston machine (1), comprising a piston crown (11), a piston skirt (12) and a coating (20) arranged on a surface of the piston (10), **characterized in that** the coating (20) comprises an iron-aluminium-based alloy or an iron-aluminium-based intermetallic compound, wherein the coating (20) comprises 0.1 to 10 wt% chromium and is arranged such that, in the installed state of the piston (10), said coating is, at least in certain sections, adjacent to a combustion chamber (40) of the piston machine (1).

2. Piston (10) according to Claim 1, **characterized in that** the coating (20) comprises 8 to 33 wt% aluminium.

3. Piston (10) according to either one of the preceding claims, **characterized in that** the coating (20) has at least 16 wt% Al and at least 5 wt% Cr.

4. Piston (10) according to any one of the preceding claims, **characterized in that** the coating (20) has 8 to 33 wt% Al, 0.1 to 10 wt% Cr, 0 to 10 wt% Co, 0 to 4 wt% Mo, 0 to 10 wt% Ni, 0 to 5 wt% W, 0 to 5 wt% Re, 0 to 6 wt% Ta, 0 to 5 wt% Ti, 0 to 4 wt% V, 0 to 20 wt% Mn, 0 to 1 wt% Si, 0 to 10 wt% Nb, 0 to 2 wt% Hf, 0 to 1 wt% B, 0 to 5 wt% C, 0 to 0.3 wt% N, 0 to 3 wt% Zr, 0 to 3 wt% Y, 0 to 1 wt% Ce, 0 to 2 wt% Ga, 0 to 2 wt% La and 0 to 2 wt% Pt, and Fe and unavoidable contaminants forming the remainder up to 100 wt%.

5. Piston (10) according to any one of Claims 1 to 3, **characterized in that** the coating (20) has 10 to 30 wt% Al, 0.1 to 5 wt% Cr, 0 to 5 wt% Co, 0 to 4 wt% Mo, 0 to 5 wt% Ni, 0 to 4 wt% W, 0 to 3 wt% Re, 0 to 3 wt% Ta, 0 to 5 wt% Ti, 0 to 4 wt% V, 0 to 10 wt% Mn, 0 to 1 wt% Si, 0 to 5 wt% Nb, 0 to 2 wt% Hf, 0 to 1 wt% B, 0 to 2 wt% C, 0 to 0.3 wt% N, 0 to 3 wt% Zr, 0 to 1 wt% Y, 0 to 0.5 wt% Ce, 0 to 1 wt% Ga, 0 to 1 wt% La and 0 to 1 wt% Pt, and Fe and unavoidable contaminants forming the remainder up to 100 wt%.

6. Piston (10) according to any one of Claims 1 to 3, **characterized in that** the coating (20) has 15 to 29 wt% Al, 0.1 to 5 wt% Cr, 0 to 4 wt% Mo, 0 to 2 wt% Ni, 0 to 4 wt% W, 0 to 5 wt% Ti, 0 to 4 wt% V, 0 to 1 wt% Si, 0 to 5 wt% Nb, 0 to 2 wt% Hf, 0 to 1 wt% B, 0 to 2 wt% C, 0 to 0.3 wt% N and 0 to 3 wt% Zr, and Fe and unavoidable contaminants forming the remainder up to 100 wt%.

7. Piston (10) according to any one of the preceding claims, **characterized in that** the piston crown (11) and/or the piston skirt (12) comprise or are composed of a light metal alloy, in particular an aluminium-silicon alloy.

8. Piston (10) according to any one of the preceding claims, **characterized in that** the coating (20) and the piston crown (11) have coefficients of thermal expansion which differ from one another by at most 10%.

9. Piston machine (1) comprising a cylinder (30) and a piston (10) according to any one of Claims 1 to 8 arranged in said cylinder.

10. Motor vehicle having a piston machine (1) according to Claim 9.

## Revendications

1. Piston (10) pour une machine à piston (1), comprenant un fond de piston (11), une jupe de piston (12) ainsi qu'un revêtement (20) disposé sur une surface du piston (10), **caractérisé en ce que** le revêtement (20) comprend un alliage à base de fer-aluminium ou un composé intermétallique à base de fer-aluminium, le revêtement (20) comprenant 0,1 à 10 % en poids de chrome et étant disposé de telle manière que dans l'état d'assemblage du piston (10), il jouxte au moins partiellement une chambre de combustion (40) de la machine à piston (1).

2. Piston (10) selon la revendication 1, **caractérisé en ce que** le revêtement (20) comprend 8 à 33 % en poids d'aluminium.

3. Piston (10) selon l'une quelconque des revendications précédentes, **caractérisé en ce que** le revêtement (20) présente au moins 16 % en poids d'Al et au moins 5 % en poids de Cr.

4. Piston (10) selon l'une quelconque des revendications précédentes, **caractérisé en ce que** le revêtement (20) présente 8 à 33 % en poids d'Al, 0,1 à 10 % en poids de Cr, 0 à 10 % en poids de Co, 0 à 4 % en poids de Mo, 0 à 10 % en poids de Ni, 0 à 5 % en poids de W, 0 à 5 % en poids de Re, 0 à 6 % en poids de Ta, 0 à 5 % en poids de Ti, 0 à 4 % en poids de V, 0 à 20 % en poids de Mn, 0 à 1 % en poids de Si, 0 à 10 % en poids de Nb, 0 à 2 % en poids de Hf, 0 à 1 % en poids de B, 0 à 5 % en poids de C, 0 à 0,3 % en poids de N, 0 à 3 % en poids de Zr, 0 à 3 % en poids de Y, 0 à 1 % en poids de Ce, 0 à 2 % en poids de Ga, 0 à 2 % en poids de La et 0 à 2 % en poids de Pt, et Fe et des impuretés inévitables formant le reste restant jusqu'à 100 % en poids.

5. Piston (10) selon l'une quelconque des revendications 1 à 3, **caractérisé en ce que** le revêtement (20) présente 10 à 30 % en poids d'Al, 0,1 à 5 % en poids de Cr, 0 à 5 % en poids de Co, 0 à 4 % en poids de Mo, 0 à 5 % en poids de Ni, 0 à 4 % en poids de W, 0 à 3 % en poids de Re, 0 à 3 % en poids de Ta, 0 à 5 % en poids de Ti, 0 à 4 % en poids de V, 0 à 10 % en poids de Mn, 0 à 1 % en poids de Si, 0 à 5 % en poids de Nb, 0 à 2 % en poids de Hf, 0 à 1 % en poids de B, 0 à 2 % en poids de C, 0 à 0,3 % en poids de N, 0 à 3 % en poids de Zr, 0 à 1 % en poids de Y, 0 à 0,5 % en poids de Ce, 0 à 1 % en poids de Ga, 0 à 1 % en poids de La et 0 à 1 % en poids de Pt, et Fe et des impuretés inévitables formant le reste restant jusqu'à 100 % en poids.

6. Piston (10) selon l'une quelconque des revendications 1 à 3, **caractérisé en ce que** le revêtement (20) présente 15 à 29 % en poids d'Al, 0,1 à 5 % en poids de Cr, 0 à 4 % en poids de Mo, 0 à 2 % en poids de Ni, 0 à 4 % en poids de W, 0 à 5 % en poids de Ti, 0 à 4 % en poids de V, 0 à 1 % en poids de Si, 0 à 5 % en poids de Nb, 0 à 2 % en poids de Hf, 0 à 1 % en poids de B, 0 à 2 % en poids de C, 0 à 0,3 % en poids de N et 0 à 3 % en poids de Zr, et Fe et des impuretés inévitables formant le reste restant jusqu'à 100 % en poids.

7. Piston (10) selon l'une quelconque des revendications précédentes, **caractérisé en ce que** le fond de piston (11) et/ou la jupe de piston (12) comprennent un alliage de métaux légers, en particulier un alliage d'aluminium-silicium, ou sont constitués d'un tel alliage.

8. Piston (10) selon l'une quelconque des revendications précédentes, **caractérisé en ce que** le revêtement (20) et le fond de piston (11) présentent des coefficients de dilatation thermique différents l'un de l'autre de maximum 10 %.

9. Machine à piston (1) comprenant un cylindre (30) et un piston (10) selon l'une quelconque des revendications 1 à 8 disposé dans celui-ci.

10. Véhicule automobile présentant une machine à piston (1) selon la revendication 9.
